# DEMANDE DE BREVET EUROPEEN

(11) **EP 0 713 027 A1**
(43) Date de publication de la demande: **22.05.1996**
(21) Numéro de dépôt: 94402639.2
(22) Date de dépôt: 18.11.1994
(51) Int. Cl.: F16D 41/28

(54) **Roue libre, notamment pour bicyclette**

(71) Demandeur: Ramos Perales, Manuel, E-07701 Mahon, (Menorca) (ES)
(72) Inventeur: Ramos Perales, Manuel, E-07701 Mahon, (Menorca) (ES)
(74) Mandataire: Pernez, Helga

(57) **Abrégé**

La présente invention concerne un dispositif de roue libre, notamment pour bicyclette, du type comportant un corps intérieur (4) solidaire du moyeu de roue et d'un corps extérieur (9) solidaire des pignons de transmission par chaîne (3), les deux corps étant coaxiaux et libres en rotation relative et réunis par un moyen tel qu'un roulement à bille d'une part, caractérisé en ce qu'il comporte un corps intermédiaire (5) cylindrique présentant des lumières (10) dans lesquelles sont logés des éléments de blocage (7) mobiles dans leur plan radial, le corps intermédiaire (5) étant disposé entre le corps intérieur et le corps extérieur et comportant des moyens (6) pour autoriser la rotation par rapport au corps extérieur (9) selon un sens seulement, le corps extérieur (5) présentant à sa surface intérieure une pluralité de cannelures (10) de forme et de section complémentaires à celles des éléments de blocage (7), et en ce que le corps intérieur (4) comporte des moyens pour repousser radialement les éléments de blocage (7) vers le cannelures (10) lorsque la rotation du corps intermédiaire par rapport au corps extérieur est bloquée.

## Description

La présente invention concerne une roue libre, notamment pour bicyclette. Une roue libre est destinée à assurer l'entraînement en rotation d'un organe, sans que ce dernier n'entraîne le moteur.

On connaît dans l'état de la technique de nombreuses solutions techniques.

A titre d'exemple, le brevet européen EP522983 décrit un moyeu de roue libre pour cycles du type dans lequel l'entraînement du moyeu de roue par la roue libre se fait par une liaison unidirectionnelle constituée par la coopération d'au moins un cliquet mobile sollicité par un système élastique pour passer d'une position escamotée inactive vers une position active en saillie, dans laquelle il coopère avec une denture, caractérisé en ce que le cliquet est mobile dans une direction ZZ' hors d'un plan diamétral P', le cliquet étant dispose mobile sur le moyeu de roue ou sur la roue libre, tandis que la denture est solidaire respectivement de ladite roue libre ou du moyeu de roue.

Une telle solution de roue libre à cliquet n'est pas totalement adaptée à la transmission de couples élevés ou susceptibles de varier brutalement. De telles situations de variations brutales se produisent par exemple dans des bicyclettes "VTT".

On a également proposé dans l'art antérieur divulgué par le brevet japonais JP2778185 un dispositif de roue libre pour bicyclette comprenant
- un corps extérieur monobloc creux qui peut tourner par rapport à un corps intérieur monobloc creux et est radialement espacé de ce dernier, ledit corps extérieur comportant une partie d'extrémité qui présente une première surface de portée ainsi qu'une surface cylindrique intérieure située axialement vers l'extérieur de ladite première surface de portée, ledit corps intérieur comportant une partie d'extrémité qui présente une deuxième surface de portée opposée a ladite première surface de portée ainsi qu'une surface cylindrique extérieure située axialement vers l'extérieur de ladite deuxième surface de portée et en opposition a ladite surface cylindrique intérieure, ladite partie d'extrémité dudit corps intérieur présentant en outre une face verticale annulaire tournée axialement vers l'intérieur et s'étendant radialement vers l'intérieur à partir de ladite surface cylindrique extérieure, des éléments de palier interposés de façon tournante entre les deux surfaces de portée, et des moyens d'étanchéité (D1) prévus entre lesdits corps intérieur et extérieur axialement vers l'extérieur desdits éléments de portée, lesdits moyens d'étanchéité comprenant un élément de protection contre la poussière fixé a ladite surface cylindrique intérieure, caractérisé en ce que :
a) ladite face verticale annulaire comporte une gorge cylindrique s'étendant parallèlement a ladite surface cylindrique extérieure,
b) ledit élément de protection contre la poussière comprend un corps tubulaire s'étendant en parallèle a ladite surface cylindrique intérieure, une collerette verticale annulaire s'étendant radialement vers l'intérieur à partir dudit corps tubulaire et en opposition a ladite face verticale annulaire, et un prolongement tubulaire s'étendant axialement vers l'extérieur à partir de ladite collerette verticale annulaire et pénétrant dans ladite gorge cylindrique annulaire,
c) ledit élément de protection contre la poussière est espacé dans sa totalité dudit corps intérieur de manière à définir entre eux un jeu en labyrinthe s'étendant le long de ladite surface cylindrique extérieure, de ladite face verticale annulaire et de ladite gorge cylindrique, et
d) la totalité de ladite deuxième surface de portée est située radialement vers l'intérieur de toutes les parties du ou sur ledit corps extérieur (20) qui sont situées axialement vers l'extérieur de ladite première surface de portée.

Un autre document de l'art antérieur, le brevet italien IT2300481 décrit une roue libre pour bicyclettes comprenant un corps intérieur, solidaire du moyeu de roue et d'un corps extérieur portant les pignons de transmission par chaîne, roulant sur le corps intérieur par l'intermédiaire de deux ensembles de billes placées circonférentiellement, le siège de l'un de ces ensembles comprenant un cône visse sur le corps intérieur réglable par rapport a un épaulement dudit corps, caractérisé par le fait que l'un d'une série de cônes d'ajustement, fabriques a des mesures axiales légèrement différentes, est prévu pour être vissé sur le corps intérieur, l'appui entre ledit cône et ledit épaulement ayant lieu suivant des surfaces coniques à coopération réciproque.

Ces différentes solutions techniques ne sont pas totalement satisfaisantes, et le but de l'invention est de proposer un dispositif de roue libre robuste et fiable permettant des accélérations brutales et offrant une faible résistance dans le cas où la roue tourne à une vitesse supérieure que le moteur ou le pédalier.

A cet effet, l'invention concerne plus particulièrement un dispositif de roue libre, notamment pour bicyclette, du type comportant un corps intérieur solidaire du moyeu de roue et d'un corps extérieur solidaire des pignons de transmission par chaîne, les deux corps étant coaxiaux et libres en rotation relative et réunis par un moyen tel qu'un roulement à bille d'une part, caractérisé en ce qu'il comporte un corps intermédiaire cylindrique présentant des lumières dans lesquelles sont logés des éléments de blocage mobiles dans leur plan radial, le corps intermédiaire étant disposé entre le corps intérieur et le corps extérieur et comportant des moyens pour autoriser la rotation par rapport au corps extérieur selon un sens seulement, le corps extérieur présentant à sa surface intérieure une pluralité de cannelures de forme et de section complémentaires à celles des éléments de blocage, et en ce que le corps intérieur comporte des moyens pour repousser radialement les éléments de blocage vers les cannelures lorsque la rotation du corps intermédiaire par rapport au corps extérieur est bloquée.

Avantageusement, le moyen pour autoriser la rotation du corps intermédiaire par rapport au corps extérieur selon un sens seulement, est constitué par un cliquet.

De préférence, le corps intermédiaire est muni d'un cliquet mobile entre une position de repos dans laquelle il coopère avec un épaulement de blocage prévu sur le corps extérieur, et une deuxième position dans laquelle il est repoussé vers le centre du dispositif.

Avantageusement, l'épaulement de blocage prévu sur le corps extérieur est constitué par les bords des cannelures.

Selon une variante de réalisation, le corps intérieur présente une forme oblongue, sa section étant délimitée par deux segments opposés d'un rayon de courbure sensiblement égal au rayon de courbure intérieur du corps intermédiaire, lesdits segments étant reliés par deux segments dont l'un au moins est un méplat préservant un espace libre d'une section permettant le déplacement des éléments de blocage.

Avantageusement, le corps intérieur est constitué par un cylindre d'un diamètre extérieur légèrement inférieur au diamètre intérieur du corps intermédiaire et présentant deux méplats diamétralement opposés.

Selon une variante particulière, les éléments de blocage sont constitués par des tiges cylindriques et en ce que les cannelures sont de forme semi-cylindriques.

De préférence, le corps intermédiaire est constitué par un élément tubulaire dont les parois présentent des lumières axiales propres à limiter le déplacement des tiges cylindriques vers le centre du dispositif, dans une position dans laquelle elles ne viennent plus en coopération avec le corps extérieur.

L'invention sera mieux comprise à la lecture de la description qui suit, faisant référence aux dessins annexés où :
- la figure 1 représente une vue selon un plan de coupe longitudinal de la roue arrière d'une bicyclette incorporant le dispositif de roue libre selon l'invention ;
- les figures 2 et 3 représentent des vues en coupe AA' du dispositif de roue libre respectivement en position libre et en position d'effort.

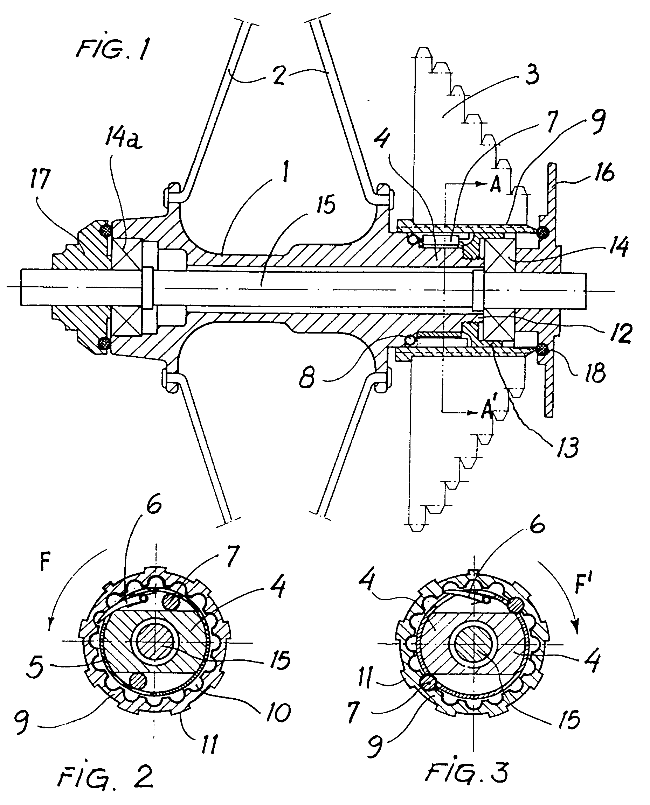

La figure 1 représente une vue selon un plan de coupe longitudinal de la roue arrière d'une bicyclette incorporant le dispositif de roue libre selon l'invention.

De façon connue, un moyeu (1) est relié à la jante de la roue par des rayons (2). L'entraînement s'effectue par une chaîne coopérant avec les pignons (3) du dérailleur. Le moyeu (1) est monté sur un axe central (15) par l'intermédiaire de roulements (8, 14 et 14a). Cet axe (15) est bloqué par deux bagues (16, 17) limitant le jeu en translation du moyeu (1) par rapport à l'axe (15) et permettant le montage de la roue sur le cadre de la bicyclette. Des joints toriques (18) empêchent la pénétration de projections de boue ou de poussière dans le dispositif de roue libre.

Le pignon (3) est solidaire d'un corps extérieur (9) de forme cylindrique. En regard de ce corps extérieur (9), le moyeu (1) présente un corps intérieur (4). Entre les deux corps (4, 9) se trouve un corps intermédiaire (5) de forme tubulaire présentant des lumières (10) à l'intérieur desquelles, pour deux desdites lumières, se trouvent des barillets (7) mobiles en translation dans le plan radial contenant l'axe longitudinal desdits barillets (7).

La figure 2 représente une vue selon le plan de coupe AA' du dispositif de roue libre, en position libre.

Le corps extérieur (9) est formé par une bague cylindrique présentant à la surface intérieure 2N cannelures (10) de forme semi-cylindriques, régulièrement espacées et disposées selon des directions axiales. A titre d'exemple, le corps extérieur (9) comporte entre 6 et 10 paires de cannelures (10). La section des cannelures (10) correspond sensiblement à la moitié de la section des barillets (7).

Le corps intermédiaire (5) est une bague de forme tubulaire à paroi épaisse présentant 2M lumières permettant de loger, pour deux d'entre elles, les barillets (7). M est un nombre entier égal à N, un multiple ou un sous-multiple de N, N désignant le nombre de cannelures (10). L'épaisseur de la paroi du corps intermédiaire (5) est inférieure à la différence entre la profondeur des cannelures (10) et la section des barillets (7) de manière à ce que les barillets (7) dépassent, quelle que soit la position, de la surface intérieure du corps intermédiaire (5).

Le corps intermédiaire (5) et le corps extérieur (9) peuvent tourner l'un par rapport à l'autre, mais dans un sens seulement. Un rochet (6) vient bloquer la rotation relative des deux pièces dans l'un des sens, et autorise une telle rotation dans l'autre sens. L'extrémité du rochet vient en contact, au repos, avec un épaulement à la surface intérieur du corps extérieur (9), en l'occurrence les bords des cannelures (10).

Le corps intérieur (4) est constitué par un élément cylindrique présentant deux méplats diamétralement opposés.

Le fonctionnement du dispositif est le suivant. Lorsque le pignon (3) tourne moins vite que le moyeu (1), le dispositif est en rotation libre comme représenté en figure 2. Les cannelures repoussent les barillets (7) vers l'intérieur du dispositif, à travers les lumières (10) du corps intermédiaire (5).

Le corps intermédiaire (5) et le corps intérieur (4) sont liés en rotation, et le corps extérieur (9) tourne librement autour d'eux.

Lorsque le pignon (3) tourne plus vite que le moyeu (1), le rochet (6) vient buter contre l'une des cannelures (10) comme représenté en figure 3. Il lie alors en rotation le corps extérieur (9) et le corps intermédiaire (5). Le corps intérieur (4) repousse alors les barillets (7) à travers les lumières (10) correspondantes jusqu'à ce qu'ils viennent se loger dans les cannelures (10) du corps extérieur (9). Le méplat du corps intérieur vient alors buter le long de ligne de contact contre la surface émergente des barillets (7), ce qui assure la liaison en rotation du corps intérieur (4) et du corps extérieur (9). L'effort dû à l'entraînement se répartit sur les zones de contact entre le méplat et les barillets, et pas seulement entre l'extrémité d'un ou de plusieurs rochets comme dans les dispositifs selon l'art antérieur.

L'invention est décrite dans ce qui précède à titre d'exemple non limitatif. Il est bien entendu que l'Homme de Métier sera à même de réaliser différentes variantes sans pour autant sortir du cadre de l'invention.

## Revendications

1. Dispositif de roue libre, notamment pour bicyclette, du type comportant un corps intérieur (4) solidaire du moyeu de roue et d'un corps extérieur (9) solidaire des pignons de transmission par chaîne (3), les deux corps étant coaxiaux et libres en rotation relative et réunis par un moyen tel qu'un roulement à bille d'une part, caractérisé en ce qu'il comporte un corps intermédiaire (5) cylindrique présentant des lumières (10) dans lesquelles sont logés des éléments de blocage (7) mobiles dans leur plan radial, le corps intermédiaire (5) étant disposé entre le corps intérieur et le corps extérieur et comportant des moyens (6) pour autoriser la rotation par rapport au corps extérieur (9) selon un sens seulement, le corps extérieur (5) présentant à sa surface intérieure une pluralité de cannelures (10) de forme et de section complémentaires à celles des éléments de blocage (7), et en ce que le corps intérieur (4) comporte des moyens pour repousser radialement les éléments de blocage (7) vers le cannelures (10) lorsque la rotation du corps intermédiaire par rapport au corps extérieur est bloquée.

2. Dispositif de roue libre selon la revendication 1 caractérisé en ce que le moyen pour autoriser la rotation du corps intermédiaire (5) par rapport au corps extérieur (9) selon un sens seulement, est constitué par un cliquet (6).

3. Dispositif de roue libre selon la revendication 2 caractérisé en ce que le corps intermédiaire (5) est muni d'un cliquet (6) mobile entre une position de repos dans laquelle il coopère avec un épaulement de blocage prévu sur le corps extérieur (9), et une deuxième position dans laquelle il est repoussé vers le centre du dispositif.

4. Dispositif de roue libre selon la revendication 3 caractérisé en ce que l'épaulement de blocage prévu sur le corps extérieur (9) est constitué par les bords des cannelures (10).

5. Dispositif de roue libre selon l'une quelconque des revendications précédentes caractérisé en ce que le corps intérieur (4) présente une forme oblongue, sa section étant délimitée par deux segments opposés d'un rayon de courbure sensiblement égal au rayon de courbure intérieur du corps intermédiaire (5), lesdits segments étant reliés par deux segments dont l'un au moins est un méplat préservant un espace libre d'une section permettant le déplacement des éléments de blocage (7).

6. Dispositif de roue libre selon la revendication 5 caractérisé en ce que le corps intérieur (5) est constitué par un cylindre d'un diamètre extérieur légèrement inférieur au diamètre intérieur du corps intermédiaire (5) et présentant deux méplats diamétralement opposes.

7. Dispositif de roue libre selon l'une quelconque des revendications précédentes caractérisé en ce que les éléments de blocage (7) sont constitués par des tiges cylindriques et en ce que les cannelures (10) sont de forme semi-cylindriques.

8. Dispositif de roue libre selon la revendication 7 caractérisé en ce que le corps intermédiaire (5) est constitué par un élément tubulaire dont les parois présentent des lumières axiales propres à limiter le déplacement des barillets cylindriques (7) vers le centre du dispositif, dans une position dans laquelle elles ne viennent plus en coopération avec le corps extérieur.
